(19) Europäisches Patentamt / European Patent Office / Office européen des brevets

(11) **EP 3 751 124 B1**

(12) **EUROPEAN PATENT SPECIFICATION**

(45) Date of publication and mention
of the grant of the patent:
**13.08.2025  Bulletin 2025/33**

(21) Application number: **19764833.0**

(22) Date of filing: **08.03.2019**

(51) International Patent Classification (IPC):
**F02B 23/06** *(2006.01)*        **F02F 3/26** *(2006.01)*

(52) Cooperative Patent Classification (CPC):
**F02B 23/0672; F02B 23/0651; F02B 23/0669;
F02B 23/0684; F02B 23/0687; F02B 23/0693;**
Y02T 10/12

(86) International application number:
**PCT/KR2019/002733**

(87) International publication number:
**WO 2019/172710 (12.09.2019 Gazette 2019/37)**

(54) **DIESEL ENGINE CHARACTERISED BY ITS PISTONS**

DIESELMOTOR GEKENNZEICHNET DURCH SEINE KOLBEN

MOTEUR DIESEL CARACTÉRISÉ PAR SES PISTONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.03.2018   KR 20180028251**

(43) Date of publication of application:
**16.12.2020  Bulletin 2020/51**

(73) Proprietor: HD Hyundai Infracore Co., Ltd.
**Incheon 22502 (KR)**

(72) Inventors:
• **LEE, Jongyoon**
  **Hanam-si Gyeonggi-do 13015 (KR)**
• **YOO, Dockoon**
  **Seoul 08021 (KR)**
• **YU, Jinhwan**
  **Incheon 22000 (KR)**

• **KIM, Yeongchu**
  **Incheon 22735 (KR)**
• **JUNG, Wook**
  **Incheon 22002 (KR)**
• **MIN, Kyungsoo**
  **Incheon 21986 (KR)**
• **HAN, Hyoungmin**
  **Seoul 07344 (KR)**

(74) Representative: **Isarpatent**
**Patent- und Rechtsanwälte Barth
Charles Hassa Peckmann & Partner mbB
Friedrichstrasse 31
80801 München (DE)**

(56) References cited:
DE-A1- 102005 037 562    DE-A1- 102005 049 443
JP-A- 2010 101 243    JP-A- 2016 151 236
JP-A- 2017 194 004    JP-B2- 4 405 403
KR-A- 20130 037 888

**Description**

DISCLOSURE OF THE INVENTION

PROBLEMES TO BE SOLVED

An object of the present invention provides a diesel engine capable of improving fuel efficiency and reducing soot emissions.

MEANS TO SOLVE THE PROBLEMS

According to the present invention, a diesel engine, as defined by independent claim 1, is provided. The diesel according to the present invention includes a piston received slidably in a cylinder, and including a main body having an annular-shaped upper surface about a central axis and a combustion chamber provided in the main body to be recessed from the upper surface of the main body, and an injector installed in a cylinder head covering the cylinder to penetrate through the cylinder head and configured to inject fuel into the combustion chamber at a second acute angle with respect to the central axis. The combustion chamber includes a first bowl and a second bowl above the first bowl with a lip interposed between the first bowl and the second bowl, the lip protruding toward the central axis. The second bowl extends in a radial direction from the lip and includes a bowl guide portion that extends in the radial direction from the lip and is inclined at a first acute angle with respect to the central axis. The second bowl is arranged between the lip and the upper surface of the main body such that gas burned in the second bowl flows above the upper surface and particle matters, PM, generated in the second bowl is oxidized. A surface of the lip has a portion of a first circle with a first radius, and a surface of the second bowl has a portion of a second circle with a second radius less than the first radius. A surface of the bowl guide portion has a common tangent line between the first circle and the second circle. An intersection point of the first bowl and the lip has a central angle rotated by a first angle from a midpoint of a circle of a surface of the first bowl. The central angle of the intersection point is determined to be within a half of a fuel injection angle plus/minus 10 degrees. The injector injects the fuel at the second acute angle with respect to the central axis toward the intersection point of the first bowl and the lip at top dead center (TDC) and injects the fuel toward a bottom of the second bowl at end point of fuel injection (EOI). A surface of the first bowl has a portion of a third circle with a third radius.

In example embodiments, a lowermost point of the second bowl may be positioned lower than a peak point of the lip.

In example embodiments, the injector may inject fuel at a second acute angle with respect to the central axis, and the second acute angle may be less than the first acute angle of the bowl guide portion.

In example embodiments, the second acute angle may range from 76 degrees to 79 degrees.

In example embodiments, a common tangent line between the second circle and the third circle may pass through an intersection point of the first bowl and the lip.

EFFECTS OF THE INVENTION

According to example embodiments, a piston for a direct-injection type diesel engine may include a combustion chamber provided in a main body to be recessed from an upper surface of the main body, wherein fuel injected from an injector is mixed with air in the combustion chamber. The combustion chamber may include a first bowl and a second bowl above the first bowl with a lip interposed between the first bowl and the second bowl, the lip protruding toward the central axis, and the second bowl may extend in a radial direction from the lip and may include a bowl guide portion that extends in the radial direction from the lip and is inclined at a first acute angle with respect to the central axis.

Accordingly, fuel may be distributed to the first bowl as a main combustion chamber and the second bowl as an auxiliary combustion chamber, respectively, to thereby maximize utilization of air inside the combustion chamber and lower a local equivalence ratio.

Thus, fuel may be injected to the first bowl at a high fuel injection angle at an initial fuel injection point and may be injected into the second bowl chamber at end point of fuel injection, to thereby increase combustion efficiency and reduce PM.

BRIEF DESCRIPTION OF THE DRAWINGS

FIG. 1 is a cross-sectional view illustrating a direct injection type diesel engine in accordance with example embodiments.

FIG. 2 is a cross-sectional view illustrating a piston at end point of fuel injection (EOI) in the diesel engine of FIG. 1.

FIG. 3 is a cross-sectional view illustrating the piston of the diesel engine of FIG. 1.

FIG. 4 is an enlarged cross-sectional view illustrating a portion of the piston of FIG. 3.

FIG. 5 is a cross-sectional view illustrating diameters of components of the piston in the diesel engine of FIG. 1.

BEST MODE FOR CARRYING OUT THE INVENTION

Hereinafter, preferable embodiments of the present invention will be explained in detail with reference to the accompanying drawings.

In the drawings, the sizes and relative sizes of components or elements may be exaggerated for clarity.

Example embodiments may, however, be embodied in many different forms and should not be construed as limited to example embodiments set forth herein.

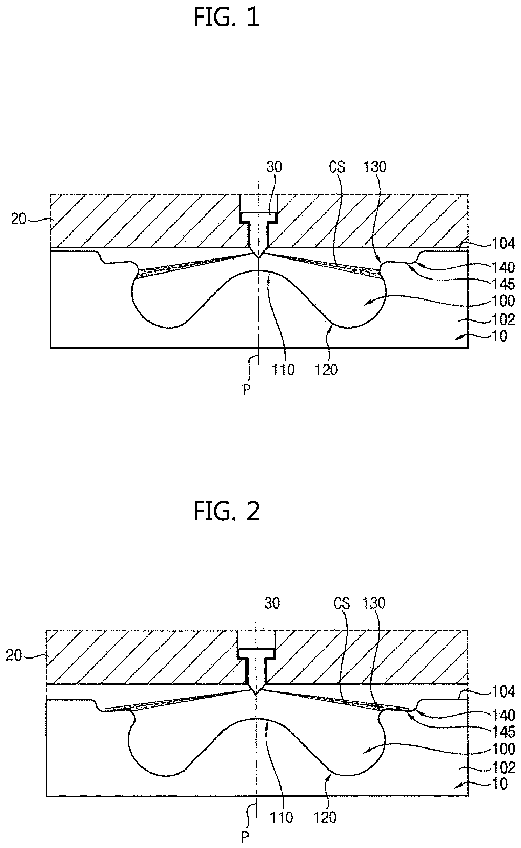

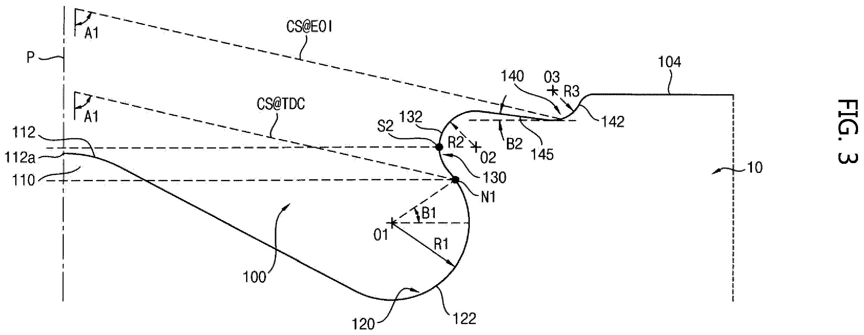

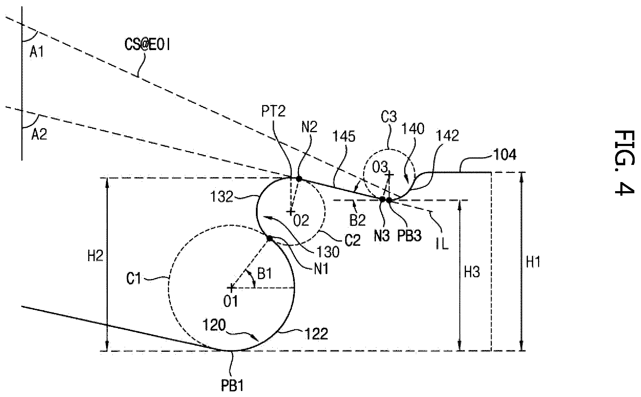

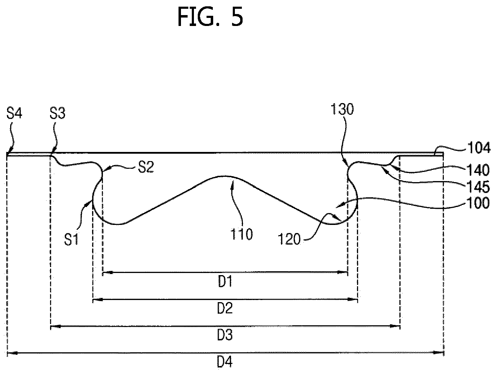

FIG. 1 is a cross-sectional view illustrating a direct injection type diesel engine in accordance with example embodiments. FIG. 2 is a cross-sectional view illustrating a piston at end point of fuel injection (EOI) in the diesel engine of FIG. 1. FIG. 3 is a cross-sectional view illustrating the piston of the diesel engine of FIG. 1. FIG. 4 is an enlarged cross-sectional view illustrating a portion of the piston of FIG. 3. FIG. 5 is a cross-sectional view illustrating diameters of components of the piston in the diesel engine of FIG. 1.

Referring to FIGS. 1 to 5, a diesel engine may include a piston 10 received slidably in a cylinder and having a combustion chamber 100 therein, a cylinder head 20 covering the cylinder, and an injector 30 installed in the cylinder head 20 to penetrate through the cylinder head 20 and configured to inject fuel into the combustion chamber 100.

The piston 10 may slide up and down inside the cylinder to compress an air in the cylinder. The piston 10 may have a central axis P. When the piston 10 is assembled into the cylinder, the central axis P of the piston 10 may be aligned with the longitudinal axis of the cylinder.

The piston 10 may transfer an explosive force from an expanding exhaust gas generated when the air and the incoming fuel are combusted, to a crankshaft (not illustrated) through a connecting rod. The piston 10 may include a material having heat resistance and corrosion resistance. For example, the piston 10 may include aluminum or cast iron.

The cylinder head 20 may have a bottom surface that covers the cylinder and faces the combustion chamber 100. The cylinder head 20 may further include an intake port (not illustrated) through which the air is introduced and an exhaust port (not illustrated) through which the exhaust gas is discharged. The cylinder head 20 may further include an intake valve for opening or closing an intake inlet connected to the intake port, and an exhaust valve for opening or closing an exhaust outlet connected to the exhaust port.

The injector 30 may be installed to penetrate through the cylinder head 20 and may inject fuel into the combustion chamber 100. For example, the injector 30 may have nozzle holes which inject the fuel. The nozzle holes may be spaced apart from each other along a circumferential direction to inject the fuel in all directions. In addition, a fuel injection pressure of the injector 30 may range from about 2,200 bar to about 3,000 bar.

In example embodiments, the injector 30 may inject fuel at a predetermined acute angle A1 with respect to the central axis P, that is, a fuel injection angle. The fuel injection angle A1 of the centerline of the fuel injected from the nozzle hole of the injector 30 with respect to the central axis P may range from 70 degrees to 80 degrees. For example, the fuel injection angle may range from 76 degrees to 79 degrees.

In example embodiments, the piston 10 may include a main body 102 having an upper surface 104 about the central axis P and the combustion chamber 100 provided on the upper surface 104 of the main body 102.

The upper surface 104 may be substantially flat. The upper surface 104 may expend in the circumferential direction about the central axis P. The upper surface 104 may be an annular ring having an inner diameter and an outer diameter. The inner diameter D3 of the upper surface 104 may be defined by an inner limited point S3, and the outer diameter D4 of the upper surface 104 may be defined by an outer limited point S4. The outermost surface of the piston 10 may include the outer limited point S4.

The combustion chamber 100 may include an opening recessed from the upper surface 104 of the main body 102 and the fuel injected from the injector 30 may be mixed with the air in the combustion chamber. The combustion chamber 100 may include a first bowl 120, a lip 130 and a second bowl 140. The lip 130 may be provided between the first bowl 120 and the second bowl 140 and the second bowl 140 may be arranged above the first bowl 120.

The piston 10 may include a centre pip 22. The centre pip 22 may form a central portion of a floor of the combustion chamber 100. The centre pip 22 may be a convex projection. A protruding height of the centre pip 22 may be between an intersection point N1 of the first bowl 120 and the lip 130 and an inner limited portion S2 of the lip 130. The centre pip 22 may have a conical shape or a dome shape. The centre pip 110 may have an inclined surface with respect to the central axis P. A depth of the centre pip 110 may become deeper as a distance from the central axis P increases.

The first bowl 120 may extend in a radial direction from the center pip 22. The first bowl 120 may be formed as a partial torus around the centre pip 22. The first bowl 120 may be concentric with the center pip 22. The first bowl 120 may form a portion of the floor and a portion of a sidewall of the combustion chamber 100.

The first bowl 120 may have a concave arc shape in cross section. A surface 122 of the first bowl 120 may have a portion of a first circle C1 with a first radius R1. A bottom point PB1 of the first bowl 120 may be the lowermost point of the combustion chamber 100. The bottom point PB1 of the first bowl 120 may have a first depth H1 from the upper surface 104. The diameter D2 of the first bowl 120 may be defined by an outer limited point S1 of the first bowl 120.

The lip 130 may extend toward the central axis P1 from the first bowl 120. The lip 130 may form a portion of the sidewall of the combustion chamber 100. The lip 130 may have a convex arc shape in cross section. A surface 132 of the lip 130 may have a portion of a second circle C2 with a second radius R2. The second radius R2 may be less than the first radius R1. The diameter D1 of the lip 130 may be defined by an inner limited portion S2 of the lip 130. The bottom point PB1 of the first bowl 120 may have a second depth H2 from a peak point PT2 of the lip 130.

The second bowl 140 may extend in the radial direction from the lip 130. The second bowl 140 may be arranged between the lip 130 and the upper surface 104. The second bowl 140 may be formed as a partial torus inwardly from the upper surface 104. The second bowl 140 may be concentric with the center pip 22 and the first bowl 120. The second bowl 140 may form a portion of the sidewall of the combustion chamber 100.

The second bowl 140 may have a concave arc shape in cross section. A surface 142 of the second bowl 140 may have a portion of a third circle C2 with a third radius R3. The third radius R3 may be less than the second radius R2. The bottom point PB1 of the first bowl 120 may have a third depth H3 from a bottom point PB3 of the second bowl 140.

As illustrated in FIGS. 3 and 4, a common tangent line between the first circle C1 and the second circle C2 may pass through the intersection point N1 of the first bowl 120 and the lip 130. A slope of a tangent line of the first circle C1 at the intersection point N1 may be the same as a slope of the tangent line of the second circle C2 at the intersection point N1.

The intersection point N1 of the first bowl 120 and the lip 130 may have a central angle rotated by a first angle B1 from the midpoint O1 of the first circle C1 of the surface 122 of the first bowl 120. Here, the central angle B1 of the intersection point N1 may be determined to be within a half of the fuel injection angle plus/minus 10 degrees ( $\frac{A1}{2} \pm 10$ ) (deg).

A ratio of the diameter D2 of the first bowl 120 and the inner diameter D4 of the upper surface 104 may range from 0.52 to 0.60. A ratio of the diameter D1 of the lip 130 and the outer diameter D3 of the upper surface 104 may range from 0.69 to 0.78. A ratio of the second depth H2 and the first depth H1 may range from 0.1 to 0.2.

In example embodiments, the second bowl 140 may include a bowl guide portion 145 that extends in the radial direction from the lip 130 and is inclined at a predetermined angle A2 with respect to the central axis P. The fuel injection angle A1 may be determined to be less than the inclination angle A2 of the bowl guide portion 145. The bottom point PB3, that is, the lowermost point of the second bowl 140 may be positioned lower than the peak point PT2, that is, the uppermost point of the lip 130. The inclination angle A2 of the bowl guide portion may be determined as a following equation (1).

$$0 < fuel\ injection\ angle\ (A1) < (A2) \qquad \text{------ equation (1)}$$

A surface of the bowl guide portion 145 may have a sloped side. The surface of the bowl guide portion 145 may have a common tangent line IL of the second circle C2 of the lip 130 and the third circle C3 of the second bowl 140. The common tangent line of the bowl guide portion 145 may pass through an intersection point N2 of the lip surface 132 and the bowl guide portion 145 and an intersection point N3 between the bowl guide portion 145 and a second bowl surface 142.

In example embodiments, as illustrated in FIG. 1, the injector 30 may inject the fuel to flow into the first bowl 120 at top dead center (TDC). The injector 30 may inject the fuel toward the intersection point N1 of the first bowl 120 and the lip 130 at top dead center (TDC). Additionally, as illustrated in FIG. 2, the injector 30 may inject the fuel to flow into the second bowl 140 at end of injection (EOI). The injector 30 may inject the fuel toward the bottom point PB3, that is, bottom of the second bowl 140.

At TDC the fuel may be injected toward the intersection N1 of the first bowl 120 as a main combustion chamber and the lip 130 at the fuel injection angle A1. Since the fuel injected toward the intersection N1 moves along the circular shape in cross section of the first bowl 120, reduction in kinetic energy caused by collision with the wall surface may be minimized while the injected fuel is burned. Accordingly, a mixing ratio of air and fuel may be increased using a strong swirl flow inside the first bowl 120 to thereby improve combustion efficiency.

During the fuel injection, the piston 10 may descend, and at end point of fuel injection (EOI) the direction of flow may be reversed in an opposite direction to a squishy direction. In here, fuel may be injected toward the bottom of the second bowl 140 as an auxiliary combustion chamber to be burned. The gas burned in the second bowl 140 may flows above the upper surface 104 and PM generated in the auxiliary combustion chamber may be oxidized.

The second bowl 140 may includes the bowl guide portion 145, and since the fuel injected at the end point of fuel injection moves along the downward slope of the bowl guide portion 145, the reduction amount of kinetic energy may be minimized while the fuel is burned.

Thus, fuel may be distributed to a main combustion chamber and the auxiliary combustion chamber respectively, and a local equivalence ratio may be reduced by utilizing the air present in each.

As mentioned above, the direct injection type diesel engine according to example embodiments may distribute fuel to the main combustion chamber and the auxiliary combustion chamber, respectively, to thereby maximize utilization of air inside the combustion chamber and lower the local equivalence ratio to reduce PM.

Further, fuel may be injected to a high squish jet region at a high fuel injection angle of 76 degrees to 79 degrees at the initial fuel injection point to thereby increase combustion efficiency. Fuel may be injected into the auxiliary combustion chamber at the end point of fuel injection and may be burned at a high mixing rate with air without losing kinetic energy, and PM generated in the auxiliary combustion chamber may be induced to be oxidized using air in the space above the upper surface.

## Claims

1. A diesel engine comprising:

   a piston (10) received slidably in a cylinder, and including a main body (102) having an annular-shaped upper surface (104) about a central axis (P) and a combustion chamber (100) provided in the main body (102) to be recessed from the upper surface (104) of the main body (102) such that fuel injected from an injector (30) is mixed with air in the combustion chamber (100); and
   an injector (30) installed in a cylinder head (20) covering the cylinder to penetrate through the cylinder head (20) and configured to inject fuel into the combustion chamber (100) at a second acute angle (A1) with respect to the central axis (P),
   wherein the combustion chamber (100) includes a first bowl (120) and a second bowl (140) above the first bowl (120) with a lip (130) interposed between the first bowl (120) and the second bowl (140), the lip (130) protruding toward the central axis (P),
   wherein the second bowl (140) extends in a radial direction from the lip (130) and includes a bowl guide portion (145) that extends in the radial direction from the lip (130) and is inclined at a first acute angle (A2) with respect to the central axis (P),
   wherein the second bowl (140) is arranged between the lip (130) and the upper surface (104) of the main body (102) such that gas burned in the second bowl (140) flows above the upper surface (104) and particle matters, PM, generated in the second bowl (140) is oxidized,
   wherein a surface of the lip (130) has a portion of a first circle (C2) with a first radius (R2), and a surface of the second bowl (140) has a portion of a second circle (C3) with a second radius (R3) less than the first radius (R2),
   wherein a surface of the bowl guide portion (145) has a common tangent line between the first circle (C2) and the second circle (C3),
   wherein an intersection point (N1) of the first bowl (120) and the lip (130) has a central angle (B1) rotated by a first angle (B1) from a midpoint of a circle of a surface of the first bowl (120),
   wherein the central angle (B1) of the intersection point (N1) is determined to be within a half of a fuel injection angle plus/minus 10 degrees,
   wherein the injector (30) injects the fuel at the second acute angle (A1) with respect to the central axis (P) toward the intersection point (N1) of the first bowl (120) and the lip (130) at top dead center, TDC, and injects the fuel toward a bottom of the second bowl (140) at end point of fuel injection, EOI, and
   wherein a surface of the first bowl (120) has a portion of a third circle (C1) with a third radius (R1).

2. The diesel engine of claim 1, wherein a lowermost point of the second bowl (140) is positioned lower than a peak point (TP2) of the lip (130).

3. The diesel engine of claim 1, wherein the second acute angle (A1) at which the fuel is injected by the injector (30) with respect to the central axis (P) is less than the first acute angle (A2) of the bowl guide portion (145).

4. The the diesel engine of claim 3, wherein the second acute angle (A2) ranges from 76 degrees to 79 degrees.

5. The diesel engine of claim 1, wherein a common tangent line between the second circle (C3) and the third circle (C3) passes through an intersection point (N3) of the first bowl (120) and the lip (130).

6. The diesel engine of claim 1, further comprising:

   a centre pip (110) protruding upwardly from a central portion of a floor of the combustion chamber (100), and

wherein a height of the centre pip (110) is between the intersection point (N1) of the first bowl (120) and the lip (130) and an inner limited portion of the lip (130).

**Patentansprüche**

1. Dieselmotor, umfassend:

    einen Kolben (10), der gleitend in einem Zylinder aufgenommen ist und einen Hauptkörper (102) mit einer ringförmigen oberen Fläche (104) um eine Mittelachse (P) und eine Brennkammer (100) aufweist, die in dem Hauptkörper (102) vorgesehen ist, um in Bezug auf die obere Fläche (104) des Hauptkörpers (102) vertieft zu sein, so dass Kraftstoff, der von einer Einspritzeinrichtung (30) eingespritzt wird, mit Luft in der Brennkammer (100) vermischt wird; und
    eine Einspritzeinrichtung (30), die in einem Zylinderkopf (20) installiert ist, der den Zylinder abdeckt, um den Zylinderkopf (20) zu durchdringen, und die eingerichtet ist, um Kraftstoff in die Brennkammer (100) in einem zweiten spitzen Winkel (A1) in Bezug auf die Mittelachse (P) einzuspritzen,
    wobei die Brennkammer (100) eine erste Mulde (120) und eine zweite Mulde (140) über der ersten Mulde (120),
    wobei eine Lippe (130) zwischen der ersten Mulde (120) und der zweiten Mulde (140) angeordnet ist, wobei die Lippe (130) in Richtung der Mittelachse (P) vorsteht,
    wobei sich die zweite Mulde (140) in einer radialen Richtung von der Lippe (130) erstreckt und einen Muldenführungsabschnitt (145) aufweist, der sich in der radialen Richtung von der Lippe (130) erstreckt und in einem ersten spitzen Winkel (A2) in Bezug auf die Mittelachse (P) geneigt ist,
    wobei die zweite Mulde (140) derart zwischen der Lippe (130) und der oberen Fläche (104) des Hauptkörpers (102) angeordnet ist, dass Gas, das in der zweiten Mulde (140) verbrannt wird, über die obere Fläche (104) strömt und
    Partikelstoffe, PM, die in der zweiten Mulde (140) entstehen, oxidiert werden,
    wobei eine Fläche der Lippe (130) einen Abschnitt eines ersten Kreises (C2) mit einem ersten Radius (R2) aufweist und eine Fläche der zweiten Mulde (140) einen Abschnitt eines zweiten Kreises (C3) mit einem zweiten Radius (R3) aufweist, der kleiner als der erste Radius (R2) ist,
    wobei eine Fläche des Muldenführungsabschnitts (145) eine gemeinsame Tangentenlinie zwischen dem ersten Kreis (C2) und dem zweiten Kreis (C3) aufweist,
    wobei ein Schnittpunkt (N1) der ersten Mulde (120) und der Lippe (130) einen Kreiswinkel (B1) aufweist, der um einen ersten Winkel (B1) von einem Mittelpunkt eines Kreises einer Fläche der ersten Mulde (120) gedreht ist,
    wobei der Kreiswinkel (B1) des Schnittpunkts (N1) so bestimmt ist, dass er innerhalb einer Hälfte eines Kraftstoffeinspritzwinkels plus/minus 10 Grad liegt,
    wobei die Einspritzeinrichtung (30) den Kraftstoff in dem zweiten spitzen Winkel (A1) in Bezug auf die Mittelachse (P) in Richtung des Schnittpunkts (N1) der ersten Mulde (120) und der Lippe (130) an einem oberen Totpunkt, TDC, einspritzt und den Kraftstoff in Richtung eines Bodens der zweiten Mulde (140) an dem Endpunkt der Kraftstoffeinspritzung, EOI, einspritzt, und
    wobei eine Fläche der ersten Mulde (120) einen Abschnitt eines dritten Kreises (C1) mit einem dritten Radius (R1) aufweist.

2. Dieselmotor nach Anspruch 1, wobei ein unterster Punkt der zweiten Mulde (140) tiefer positioniert ist als ein Spitzenpunkt (TP2) der Lippe (130).

3. Dieselmotor nach Anspruch 1, wobei der zweite spitze Winkel (A1), in dem der Kraftstoff durch die Einspritzeinrichtung (30) in Bezug auf die Mittelachse (P) eingespritzt wird, kleiner ist als der erste spitze Winkel (A2) des Muldenführungsabschnitts (145).

4. Dieselmotor nach Anspruch 3, wobei der zweite spitze Winkel (A2) in einem Bereich von 76 Grad bis 79 Grad liegt.

5. Dieselmotor nach Anspruch 1, wobei eine gemeinsame Tangentenlinie zwischen dem zweiten Kreis (C3) und dem dritten Kreis (C3) durch einen Schnittpunkt (N3) der ersten Mulde (120) und der Lippe (130) verläuft.

6. Dieselmotor nach Anspruch 1, ferner umfassend:

    eine mittige Spitze (110), die von einem mittigen Abschnitt eines Bodens der Brennkammer (100) nach oben vorsteht, und

wobei eine Höhe der mittige Spitze (110) zwischen dem Schnittpunkt (N1) der ersten Mulde (120) und der Lippe (130) und einem inneren begrenzten Abschnitt der Lippe (130) liegt.

**Revendications**

1. Moteur diesel comprenant :

   un piston (10) reçu coulissant dans un cylindre, et
   comportant un corps principal (102) présentant une surface supérieure (104) de forme annulaire autour d'un axe central (P) et une chambre de combustion (100) située dans le corps principal (102) de façon à être en retrait par rapport à la surface supérieure (104) du corps principal (102) de telle sorte que du carburant injecté à partir d'un injecteur (30) est mélangé à de l'air dans la chambre de combustion (100) ; et
   un injecteur (30) installé dans une culasse (20) recouvrant le cylindre de façon à pénétrer dans la culasse (20) et conçu pour injecter du carburant dans la chambre de combustion (100) à un deuxième angle aigu (A1) par rapport à l'axe central (P),
   dans lequel la chambre de combustion (100) comporte un premier bol (120) et un deuxième bol (140) au-dessus du premier bol (120) avec une lèvre (130) interposée entre le premier bol (120) et le deuxième bol (140), la lèvre (130) faisant saillie vers l'axe central (P),
   dans lequel le deuxième bol (140) s'étend dans une direction radiale à partir de la lèvre (130) et comporte une partie de guidage de bol (145) qui s'étend dans la direction radiale à partir de la lèvre (130) et est inclinée à un premier angle aigu (A2) par rapport à l'axe central (P),
   dans lequel le deuxième bol (140) est agencé entre la lèvre (130) et la surface supérieure (104) du corps principal (102) de telle sorte que du gaz brûlé dans le deuxième bol (140) s'écoule au-dessus de la surface supérieure (104) et des matières particulaires, PM, générées dans le deuxième bol (140) sont oxydées,
   dans lequel une surface de la lèvre (130) présente une partie d'un premier cercle (C2) avec un premier rayon (R2), et une surface du deuxième bol (140) présente une partie d'un deuxième cercle (C3) avec un deuxième rayon (R3) inférieur au premier rayon (R2),
   dans lequel une surface de la partie de guidage de bol (145) présente une ligne de tangente commune entre le premier cercle (C2) et le deuxième cercle (C3),
   dans lequel un point d'intersection (N1) du premier bol (120) et de la lèvre (130) présente un angle au centre (B1) formé par un premier angle (B1) à partir du centre d'un cercle d'une surface du premier bol (120),
   dans lequel l'angle au centre (B1) du point d'intersection (N1) est défini de façon à être compris dans une moitié d'un angle d'injection de carburant plus/moins 10 degrés,
   dans lequel l'injecteur (30) injecte le carburant au deuxième angle aigu (A1) par rapport à l'axe central (P) vers le point d'intersection (N1) du premier bol (120) et la lèvre (130) au point mort haut, TDC, et injecte le carburant vers un fond du deuxième bol (140) à la fin de l'injection de carburant, EOI, et
   dans lequel une surface du premier bol (120) présente une partie d'un troisième cercle (C1) avec un troisième rayon (R1).

2. Moteur diesel selon la revendication 1, dans lequel un point le plus bas du deuxième bol (140) est positionné plus bas qu'un point culminant (TP2) de la lèvre (130).

3. Moteur diesel selon la revendication 1, dans lequel le deuxième angle aigu (A1) auquel le carburant est injecté par l'injecteur (30) par rapport à l'axe central (P) est inférieur au premier angle aigu (A2) de la partie de guidage de bol (145).

4. Moteur diesel selon la revendication 3, dans lequel le deuxième angle aigu (A2) est compris entre 76 degrés et 79 degrés.

5. Moteur diesel selon la revendication 1, dans lequel une ligne de tangente commune entre le deuxième cercle (C3) et le troisième cercle (C3) passe par un point d'intersection (N3) du premier bol (120) et de la lèvre (130).

6. Moteur diesel selon la revendication 1, comprenant en outre :

   une pointe centrale (110) faisant saillie vers le haut depuis une partie centrale d'un fond de la chambre de combustion (100), et
   dans lequel la hauteur de la pointe centrale (110) est située entre le point d'intersection (N1) du premier bol (120) et de la lèvre (130) et une partie limitée intérieure de la lèvre (130).

# FIG. 1

# FIG. 2

FIG. 3

# FIG. 4

# FIG. 5